(19) Europäisches Patentamt European Patent Office Office européen des brevets

(11) **EP 3 560 095 B1**

(12) **FASCICULE DE BREVET EUROPEEN**

(45) Date de publication et mention de la délivrance du brevet:
**26.07.2023 Bulletin 2023/30**

(21) Numéro de dépôt: **17847793.1**

(22) Date de dépôt: **21.12.2017**

(51) Classification Internationale des Brevets (IPC):
**H02P 21/14** $^{(2016.01)}$

(52) Classification Coopérative des Brevets (CPC):
**H02P 21/14**

(86) Numéro de dépôt international:
**PCT/FR2017/053787**

(87) Numéro de publication internationale:
**WO 2018/115772 (28.06.2018 Gazette 2018/26)**

(54) **PROCÉDÉ DE DÉTERMINATION D'UNE INDUCTANCE DIRECTE ET D'UNE INDUCTANCE EN QUADRATURE D'UNE MACHINE ÉLECTRIQUE, PROGRAMME D'ORDINATEUR ET DISPOSITIF CORRESPONDANTS**

VERFAHREN ZUM BESTIMMEN EINER DIREKTACHSENINDUKTIVITÄT UND EINER QUADRATURACHSENINDUKTIVITÄT EINER ELEKTRISCHEN MASCHINE, ENTSPRECHENDES COMPUTERPROGRAMM UND VORRICHTUNG

DIRECT AND QUADRATIC INDUCTANCE DETERMINATION METHOD FOR A ELECTRIC MACHINE, CORRESPONDING SOFTWARE AND APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1662985**

(43) Date de publication de la demande:
**30.10.2019 Bulletin 2019/44**

(73) Titulaire: **Valeo Systemes de Controle Moteur 95800 Cergy Saint Christophe (FR)**

(72) Inventeurs:
- **ZINE, Wided**
  **95800 Cergy Saint Christophe (FR)**
- **BRUYERE, Antoine**
  **95800 Cergy Saint Christophe (FR)**
- **CHAUVENET, Pierre-Alexandre**
  **95800 Cergy Saint Christophe (FR)**

(74) Mandataire: **Valeo Powertrain Systems Service Propriété Intellectuelle Immeuble le Delta 14, avenue des Béguines 95892 Cergy Pontoise (FR)**

(56) Documents cités:
**WO-A1-2010/000640**

- **Ji-Hoon Jang ET AL: "Analysis of Permanent Magnet Machine for Sensorless Control based on High Freuqency Signal Injection", , 31 juillet 2001 (2001-07-31), XP055407338, Extrait de l'Internet: URL:http://ieeexplore.ieee.org/ielx5/8893/ 28116/01257561.pdf?tp=&arnumber=1257561&is number=28116 [extrait le 2017-09-18]**
- **Marek Musák ET AL: "NOVEL METHODS FOR PARAMETERS INVESTIGATION OF PM SYNCHRONOUS MOTORS", Acta Technica Corviniensis - Bulletin of Engineering, 1 janvier 2013 (2013-01-01), page 51, XP055408307, Hunedoara Extrait de l'Internet: URL:https://www.researchgate.net/file.Post FileLoader.html?id=55decd625cd9e3371b8b45e 5&assetKey=AS:273840024817674@1442299959 34 0 [extrait le 2017-09-18]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- KAIYUAN LU ET AL: "Determination of High-Frequency $d$- and $q$-axis Inductances for Surface-Mounted Permanent-Magnet Synchronous Machines", IEEE TRANSACTIONS ON INSTRUMENTATION AND MEASUREMENT., vol. 59, no. 9, 1 septembre 2010 (2010-09-01), pages 2376-2382, XP055407321, US ISSN: 0018-9456, DOI: 10.1109/TIM.2009.2034578

**Description**

DOMAINE TECHNIQUE

La présente invention concerne le domaine des machines électriques et en particulier des machines électriques synchrones, par exemple à pôles saillants.

ARRIÈRE-PLAN TECHNOLOGIQUE

La demande PCT publiée sous le numéro WO 2010/000640 A1 décrit un procédé de détermination de l'inductance directe $L_d$ et de l'inductance en quadrature $L_q$ d'une machine électrique, dans lequel des vecteurs tensions positif puis négatif sont appliqués dans la direction de chaque phase, des courants de phase transitoires sont mesurés, une position angulaire du rotor est déterminée à partir des courants de phase transitoires et les inductances $L_d$, $L_q$ sont déterminées à partir de la position angulaire du rotor.

Ce procédé de détermination de l'inductance directe $L_d$ et de l'inductance en quadrature $L_q$ présente comme inconvénient de nécessiter de mesurer les courants de phase en régime transitoire. Or, une telle mesure nécessite des capteurs de courant spécifiques, ainsi que des ressources importantes en temps de calcul. Le document i-Hoon Jang ET AL: "Analysis of Permanent Magnet Machine for Sensorless Control based on High Freuqency Signal Injection",, de 31 juillet 2001 décrit une technique d'analyse d'un moteur à aimant permanent sans capteur de position utilisant une injection de tension haute fréquence.

L'invention annexée à la présente description, a pour but de proposer un procédé de détermination de l'inductance directe $L_d$ et de l'inductance en quadrature $L_q$ ne nécessitant pas de mesurer les courants de phase en régime transitoire.

RÉSUMÉ DE L'INVENTION

L'invention divulguée dans la revendication indépendante 1 annexée à la présente description propose une méthode de détermination d'une inductance directe d'une inductance en quadrature d'une machine électrique.

Grâce à l'invention, la détermination de l'inductance directe et de l'inductance en quadrature est réalisée à partir d'une analyse spectrale de la grandeur électrique issue des courants de phase, ce qui implique que c'est le régime établi des courants de phase qui est pris en compte. En particulier, le spectre d'amplitude est issu d'une analyse spectrale de la grandeur électrique. Par exemple, les deux pics utilisés peuvent provenir soit d'une seule étape de test au cours de laquelle deux pics sont recherchés dans le spectre d'amplitude, soit de deux étapes de test au cours de chacune desquelles un pic est recherché dans le spectre d'amplitude.

De façon optionnelle, la fréquence de test est supérieure à la fréquence de rotation, de préférence au moins dix fois supérieure.

De façon optionnelle également, au cours de la première étape de test, un pic est recherché à la somme de la fréquence de rotation et de la fréquence de test.

De façon optionnelle également, la au moins une étape de test comporte une deuxième étape de test dans laquelle le champ magnétique de test est un champ magnétique tournant à la fréquence de test.

De façon optionnelle également, au cours de la deuxième étape de test, un pic est recherché à la fréquence de test.

De façon optionnelle également, au cours de la deuxième étape de test, la commande de la machine électrique comporte la détermination de consignes globales de tensions de phase comportant des consignes de test dont l'application aux phases statoriques est destinée à générer le champ magnétique de test, ces consignes de test comportant une composante selon un premier axe d'un repère fixe par rapport au stator qui est sinusoïdale à la fréquence de test, et une composante selon un deuxième axe du repère fixe qui est cosinusoïdale à la fréquence de test.

De façon optionnelle également, les deux composantes des consignes de test présentent une même amplitude de test et l'inductance en quadrature est déterminée par l'équation suivante :

$$L_q = -\frac{V_h}{-4\pi\, f_h I_{rot} + \dfrac{V_h}{L_d}}$$

où :

$I_{rot}$ est l'amplitude du pic trouvé à la fréquence de test,

$V_h$ et $f_h$ sont respectivement l'amplitude et la fréquence des deux composantes des consignes de test.

Il est également proposé un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé selon l'invention, lorsque ledit programme est exécuté sur un ordinateur.

L'invention divulgue également dans la revendication indépendante 9 annexée à la présente description, un dispositif de détermination d'une inductance directe d'une inductance en quadrature d'une machine électrique.

DESCRIPTION DES FIGURES

La figure 1 est un schéma fonctionnel d'un système électrique selon l'invention.
La figure 2 est un schéma-blocs des étapes d'un procédé selon l'invention de détermination d'inductance directe $L_d$ et d'inductance en quadrature $L_q$ par exemple mis en oeuvre dans le système électrique de la figure 1.
Les figures 3 et 4 sont des spectres d'amplitude d'une grandeur électrique déterminée à partir d'au moins une partie de courants de phase.
La figure 5 regroupe des cartographie des inductances $L_d$, $L_q$ en fonction des courants de phase.
Les figures 6 et 7 sont des schémas fonctionnels de variantes de système électrique selon l'invention.

DESCRIPTION DÉTAILLÉE

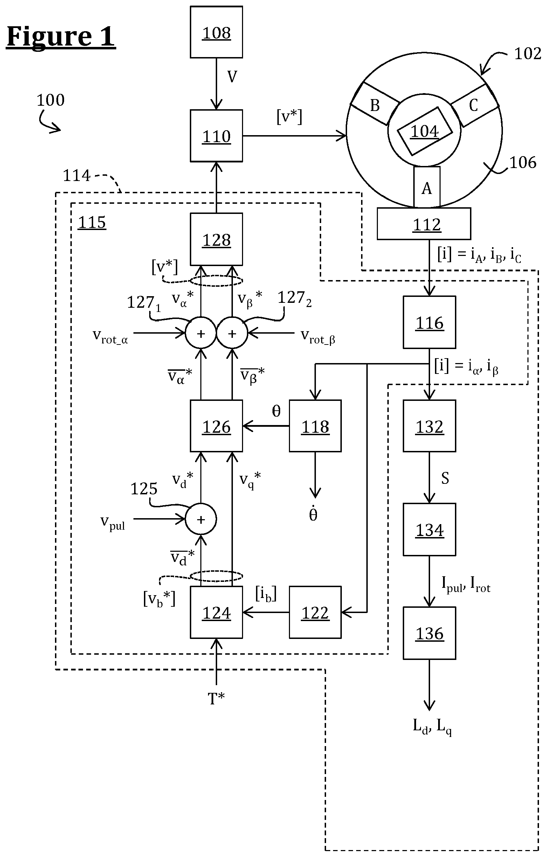

En référence à la figure 1, un système électrique 100 va à présent être décrit.

Le système électrique 100 comporte tout d'abord une machine électrique 102. Dans l'exemple décrit, la machine électrique 102 est une machine électrique synchrone, par exemple à aimants permanents.

La machine électrique synchrone 102 comporte un rotor 104 et un stator 106 comportant, dans l'exemple décrit, trois phases statoriques A, B, C. Le rotor 104 est conçu pour tourner par rapport au stator 106 et présente ainsi une position angulaire $\theta$ par rapport au stator 106.

Les grandeurs attachées aux phases statoriques A, B, C, c'est-à-dire les tensions de phase, les courants de phase, les consignes correspondantes, les inductances de la machine électrique 102, etc., peuvent être exprimées de plusieurs manières. Elles peuvent être exprimées sous forme naturelle, c'est-à-dire par l'ensemble des grandeurs individuelles physiquement mesurables, ou bien dans un repère attaché au stator 106 par deux composantes uniquement (lorsque la machine électrique 102 est équilibrée), par exemple dans le repère $\alpha$-$\beta$ par les deux composantes $\alpha$ et $\beta$ obtenues par une transformée de Clarke ou de Concordia par exemple, ou bien dans un repère tournant attaché au rotor 104 par deux composantes uniquement (lorsque la machine électrique 102 est équilibrée), par exemple dans le repère d-q par les deux composantes d et q obtenues par une transformée de Park par exemple.

Ainsi, dans la description et les revendications qui vont suivre, les grandeurs utilisées porteront une référence entre crochets lorsqu'elles sont évoquées indépendamment de la manière de les exprimer, et par les composantes les exprimant, avec des indices correspondant à la représentation utilisée, lorsqu'elles sont évoquées dans une représentation précise.

Par exemple, les courants de phase seront notés [i] lorsqu'ils sont évoqués indépendamment de la manière de les représenter. En revanche, ils seront notés $i_A$, $i_B$, ic lorsqu'ils sont exprimés sous leur forme naturelle, $i_\alpha$, $i_\beta$ lorsqu'ils sont exprimés dans le repère $\alpha$-$\beta$, et $i_d$, $i_q$ lorsqu'ils sont exprimés dans le repère d-q.

La machine électrique 102 présente une inductance directe $L_d$ (en anglais : « d-axis inductance ») et une inductance en quadrature $L_q$ (en anglais : « q-axis inductance). De préférence, la machine électrique 102 est à pôles saillants, c'est-à-dire que l'inductance directe $L_d$ a une valeur différente de celle de l'inductance en quadrature $L_q$. L'inductance directe $L_d$ et l'inductance en quadrature $L_q$ sont des composantes dans un repère tournant attaché au rotor 104 qui caractérisent les inductances du moteur électrique 102 ayant les phases statoriques A, B, C connectées en étoile. Ces inductances sont les inductances vues électriquement par l'onduleur 110. L'inductance directe $L_d$ et l'inductance en quadrature $L_q$ dépendent de l'inductance propre et de l'inductance mutuelle de chaque phase, qui dépendent elles-mêmes de la position angulaire $\theta$ du rotor 104. Dans l'exemple décrit, le repère tournant est le repère d-q, c'est-à-dire avec un axe « d » dit « direct » orienté dans le sens d'un champ magnétique tournant généré par le stator 106 pour faire tourner le rotor 104 et un axe « q » en quadrature avec l'axe direct. Le sens du champ magnétique tournant du stator 106 correspond au sens du champ magnétique du rotor 104, car le champ magnétique du rotor 104 s'aligne sur celui du stator 106.

Le système 100 comporte en outre une source de tension continue 108 conçue pour fournir une tension continue V. Dans l'exemple décrit, la source de tension continue 108 comporte une batterie.

Le système 100 comporte en outre un onduleur 110 conçu pour respectivement fournir aux phases statoriques A, B, C des tensions de phases alternatives à partir de la source de tension continue 108.

Le système 100 comporte en outre un dispositif de mesure 112 conçu pour mesurer des courants de phase [i] = $i_A$, $i_B$, ic parcourant respectivement les phases statoriques A, B, C.

Le système 100 comporte en outre un dispositif 114 de détermination de l'inductance directe $L_d$ et de l'inductance en quadrature $L_q$ de la machine électrique 102.

Le dispositif 114 est conçu pour commander l'onduleur 110 à partir d'une consigne de couple T* de manière à faire tourner le rotor 104 par rapport au stator 106 à une fréquence de rotation $f_b$. Alternativement, la consigne de couple T* pourrait être remplacée ou bien complétée par une consigne de vitesse angulaire $\dot{\theta}$* du rotor 104.

Le dispositif 114 comporte tout d'abord un module de commande 115 de l'onduleur 110.

Le module de commande 115 comporte tout d'abord un module de conversion (a, b, c / α, β) 116 conçu pour exprimer les courant de phase [i] = $i_A$, $i_B$, ic dans le repère α-β sous la forme des composantes $i_\alpha$, $i_\beta$.

Le module de commande 115 comporte en outre un module d'estimation angulaire 118 conçu pour estimer la position angulaire θ et une vitesse angulaire $\dot{\theta}$ du rotor 104 par rapport au stator 106 à partir des courants de phase [i] = $i_\alpha$, $i_\beta$.

Le module de commande 115 comporte en outre un module de consigne 124 conçu pour déterminer, à partir de la consigne de couple T*, des consignes, dites consignes principales, [$v_b$*] de tensions de phase. Les consignes principales [$v_b$*] sont destinées à entraîner la génération par le stator 106 d'un champ magnétique tournant $B_b$ à une fréquence de rotation $f_b$ liée à la position angulaire θ par l'équation : $2\pi f_b t = \theta$. Dans l'exemple décrit, les consignes principales [$v_b$*] sont exprimées dans le repère d-q sous la forme des composantes $\overline{v_d}$*, $v_q$*.

Le module de commande 115 comporte en outre un module d'estimation de courant principaux 122 conçu pour déterminer des courants de phase, dits courants de phase principaux, [$i_b$] à partir des courants de phase [i] = $i_\alpha$, $i_\beta$. Les courants de phase principaux [$i_b$] sont les courants associés au champ magnétique tournant $B_b$, c'est-à-dire ceux présents dans les courants de phase [i] à la fréquence de rotation $f_b$. Le module de consigne 124 est conçu pour prendre en compte les courants de phase principaux [$i_b$], dans l'exemple décrit dans le repère d-q sous la forme des composantes $i_{b\_d}$, $i_{b\_q}$, pour déterminer les consignes principales [$v_b$*]. Ainsi, une commande en boucle fermée est réalisée.

Le module de commande 115 comporte en outre un module d'injection pulsative 125 conçu pour injecter (c'est-à-dire ajouter) des consignes de test [$v_h$*] dans les consignes principales [$v_b$*] pour obtenir des consignes, dites consignes globales [v*]. Les consignes de test [$v_h$*] injectées par le module d'injection pulsative 125 sont destinées à entraîner la génération par le stator 106 d'un champ magnétique, dit champ magnétique de test $B_h$, variant périodiquement à une fréquence, dite fréquence de test $f_h$. Dans l'exemple décrit, les consignes de test [$v_h$*] injectées par le module 125 sont exprimées dans le repère d-q par une composante directe $v_{pul}$ variant périodiquement à la fréquence de test $f_h$ et une composante en quadrature nulle. La composante directe $v_{pul}$ est ajoutée à la composantes $\overline{v_d}$* pour donner la composante $v_d$* des consignes globales [v*]. Ainsi, le champ magnétique de test $B_h$ est destiné à varier périodiquement à la fréquence de test $f_h$ dans le sens direct du champ magnétique tournant $B_b$. Dans l'exemple décrit, la composante directe $v_{pul}$ varie sinusoïdalement dans le sens direct et est donnée par l'équation suivante :

$$v_{pul} = V_h \cos(2\pi f_h t)$$

Le module de commande 115 comporte en outre un module de conversion 126 conçu pour convertir les composantes $v_d$*, $v_q$* dans le repère α-β sous la forme des deux composantes $\overline{v_\alpha}$*, $\overline{v_\beta}$*. Cette conversion nécessite la connaissance de la position angulaire θ du rotor 104, qui est fournie par le module d'estimation 118.

Le module de commande 115 comporte en outre des modules d'injection rotative $127_1$, $127_2$ conçus pour injecter (c'est-à-dire, pour ajouter) des consignes de test [$v_h$*] dans les consignes principales [$v_b$*] pour obtenir des consignes globales [v]. Dans l'exemple décrit, une seule injection, pulsative ou rotative, a lieu à la fois de sorte que les consignes globales [v] comportent les consignes principales et soit les consignes de test [$v_h$*] injectées par le module d'injection pulsative 125, soit les consignes de test [$v_h$*] injectées par les modules d'injection rotative $127_1$, $127_2$.

Les consignes de test [$v_h$*] injectées par les modules d'injection rotative $127_1$, $127_2$ sont destinées à entraîner la génération par le stator 106 d'un champ magnétique de test $B_h$ variant périodiquement à la fréquence de test $f_h$. Dans l'exemple décrit, les consignes de test [$v_h$*] injectées par les modules $127_1$, $127_2$ sont exprimées dans le repère α-β par une composante α $v_{rot\_\alpha}$ et une composante β $v_{rot\_\beta}$ variant périodiquement à la fréquence de test $f_h$. La composante $v_{rot\_\alpha}$ est ajoutée à la composante $\overline{v_\alpha}$* et la composante $v_{rot\_\beta}$ est ajoutée à la composante $\overline{v_\beta}$* pour donner respectivement les composantes $v_\alpha$*, $v_\beta$* des consignes globales [v*]. Ainsi, le champ magnétique de test $B_h$ est destiné à tourner à la

fréquence de test $f_h$. Dans l'exemple décrit, les composantes $v_{rot\_\alpha}$, $v_{rot\_\beta}$ varient sinusoïdalement et sont données par les équations suivantes :

$$v_{rot\_\alpha} = V_h \cos(w_h t)$$

$$v_{rot\_\beta} = V_h \sin(w_h t)$$

Dans l'exemple décrit, les caractéristiques (amplitude $V_h$ et fréquence $f_h$) de l'injection rotative sont identiques à celles de l'injection pulsative. Cependant, dans d'autres modes de réalisation de l'invention, elles pourraient être différentes. En outre, dans l'injection rotative, les amplitudes des composantes $V_{rot\_\alpha}$, $v_{rot\_\beta}$ pourraient être différentes.
Le module de commande 115 comporte en outre un module de sortie 128 conçu pour commander l'onduleur 110, de sorte que l'onduleur 110 fournisse respectivement aux phases A, B, C les consignes globales [v*] = $v_A$*, $v_B$*, vc*.
Sous des consignes globales, le stator 106 est conçu pour générer un champ magnétique B comportant la superposition, d'une part, du champ magnétique tournant $B_b$ à la fréquence de rotation $f_b$ provenant des consignes principales [$v_b$*] et, d'autre part, du champ magnétique de test $B_h$ variant à la fréquence de test $f_h$ provenant des consignes de test [$v_h$*] injectées soit par le module 125, soit par les modules 127$_1$, 127$_2$.
De préférence, la fréquence de test $f_h$ est différente de la fréquence de rotation $f_b$, de préférence encore supérieure à la fréquence de rotation $f_b$, par exemple au moins dix fois supérieure. De préférence également, la fréquence de rotation $f_b$ est telle que la vitesse de rotation du rotor 104 est inférieure à 10% de la vitesse maximale de rotation du rotor 104 pour la machine électrique 102 (cette vitesse maximale étant différente d'une machine électrique à une autre). Par exemple, la fréquence de rotation $f_b$ est comprise entre 0 Hz et 100 Hz et la fréquence de test $f_h$ est d'au moins 500 Hz.
Le dispositif 114 comporte en outre un module d'analyse spectrale 132 conçu pour déterminer un spectre d'amplitude S d'une grandeur électrique déterminée à partir d'au moins une partie des courants de phase [i] = $i_A$, $i_B$, ic. Par exemple, la grandeur électrique est l'un des courants de phase $i_A$, $i_B$, ic, ou bien l'une des composantes $i_\alpha$, $i_\beta$. Dans l'exemple décrit, la grandeur électrique est la composante $i_\alpha$.
Alternativement, la grandeur électrique pourrait être la norme |i| des courants de phase [i] :

$$|i| = \sqrt{i_A{}^2 + i_B{}^2 + i_C{}^2} = \sqrt{i_\alpha{}^2 + i_\beta{}^2}$$

Le dispositif 114 comporte en outre un module de recherche de pic 134 conçu pour rechercher dans le spectre d'amplitude S un pic présent à une fréquence qui dépend de la fréquence de test $f_h$. Plus précisément, le module 134 est conçu pour rechercher un pic présent à la fréquence $f_b$+$f_h$ dans le cas d'une injection pulsative par le module 125, et à la fréquence $f_h$ dans le cas d'une injection rotative par les modules 127$_1$, 127$_2$. Le module de recherche de pic 134 est en outre conçu pour déterminer une amplitude de chaque pic trouvé, notée respectivement $I_{pul}$ et $I_{rot}$.
Le dispositif 114 comporte en outre un module de détermination d'inductance 136 conçu pour déterminer, d'une part, l'inductance directe La à partir de l'amplitude $I_{pul}$ et des caractéristiques $V_h$, $f_h$ de l'injection pulsative et, d'autre part, l'inductance en quadrature $L_q$ à partir de l'amplitude $I_{rot}$, de l'inductance La et des caractéristiques $V_h$, $f_h$ de l'injection rotative.
Dans l'exemple décrit, l'inductance La est déterminée par l'équation suivante :

$$L_d = \frac{V_h}{4\pi f_h I_{pul}}$$

où $I_{pul}$ est l'amplitude du pic trouvé à la somme de la fréquence de rotation $f_b$ et de la fréquence de test $f_h$, et $V_h$ et $f_h$ sont respectivement l'amplitude et la fréquence de la composante $v_{pul}$.
En outre, l'inductance $L_q$ est déterminée par l'équation suivante :

$$L_q = -\frac{V_h}{4\pi f_h I_{rot} - \frac{V_h}{L_d}}$$

où $I_{rot}$ est l'amplitude du pic trouvé à la fréquence de test $f_h$, $V_h$ et $f_h$ sont respectivement l'amplitude et la fréquence des composantes $v_{rot\_\alpha}$, $v_{rot\_\beta}$.

Dans l'exemple décrit, le dispositif 114 comporte un système informatique comportant une unité de traitement (non représentée) et une mémoire (non représentée) dans laquelle est enregistré un programme d'ordinateur destiné à être exécuté par l'unité de traitement. Ainsi, les modules décrits précédemment sont implémentés dans l'exemple décrit sous forme de modules informatiques du programme d'ordinateur, destinés à être exécutés par l'unité de traitement.

Alternativement, tout ou partie des modules pourrait être implémenté sous forme matérielle, c'est-à-dire sous forme d'un circuit électronique ne faisant pas intervenir de programme d'ordinateur.

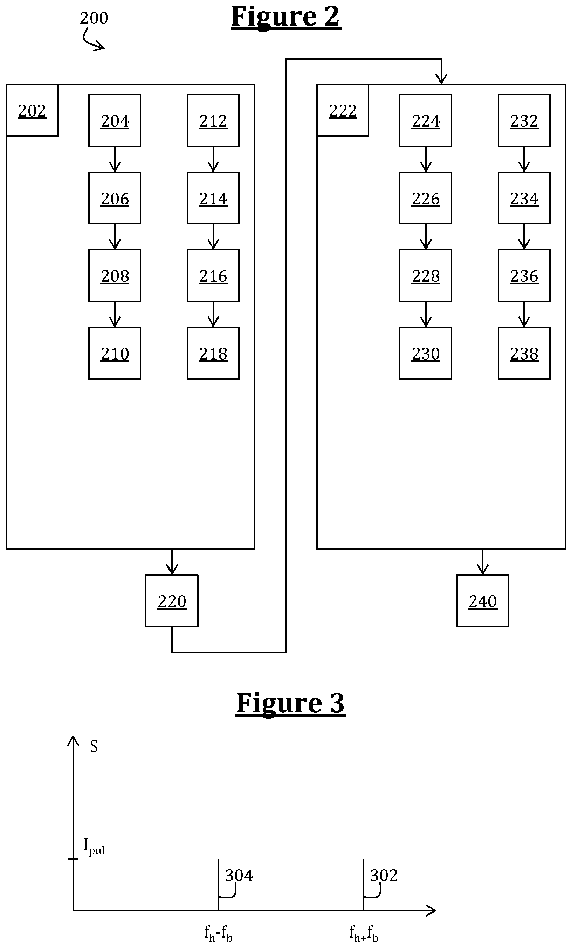

En référence, à la figure 2 un procédé 200 de détermination de l'inductance directe $L_d$ et de l'inductance en quadrature $L_q$ va à présent être décrit.

Au cours d'une première étape de test 202, les étapes 204 à 218 suivantes sont réalisées.

Au cours d'une étape 204 le module de consigne 124 détermine des consignes principales $[v_b^*] = \overline{v_d}^*$, $v_q^*$ à partir d'une consigne de couple T*.

Au cours d'une étape 206, le module d'injection pulsative 125 injecte des consignes de test $[v_h^*]$ dans les consignes principales $[v_b^*]$ pour obtenir des consignes globales $[v^*] = v_d^*$, $v_q^*$. Plus précisément, le module d'injection pulsative 125 ajoute la composante $v_{pul}$ à la composante $\overline{v_d}^*$ pour obtenir la composante va*.

Au cours d'une étape 208, le module de conversion (d, q / $\alpha$, $\beta$) 126 exprime les consignes globales $[v^*]$ dans le repère $\alpha$-$\beta$ (Les modules $127_1$ et $127_2$ ne sont pas utilisés de sorte que $v_\alpha^*$ est égal $\overline{v_\alpha}^*$ et que $v_\beta^*$ est égal $\overline{v_\beta}^*$).

Au cours d'une étape 210, le module de sortie 128 commande l'onduleur 110 de sorte que ce dernier applique les consignes globales $[v^*] = v_A^*$, $v_B^*$, vc* sur respectivement les phases statoriques A, B, C.

Ainsi, les consignes globales $[v^*] = v_A^*$, $v_B^*$, vc* comportent, d'une part, les consignes principales $[v_b^*]$ dont l'application aux phases statoriques A, B, C entraîne la génération d'un champ magnétique tournant $B_b$ à la fréquence de rotation $f_b$ et, d'autre part, les consignes de test $[v_h^*]$ dont l'application aux phases statoriques A, B, C entraîne la génération d'un champ magnétique de test $B_h$ variant périodiquement à la fréquence de test $f_h$ uniquement dans le sens direct du champ magnétique tournant $B_b$.

Au cours d'une étape 212, pendant la commande de la machine électrique 102, le dispositif de mesure 112 mesure les courants de phase $[i] = i_A$, $i_B$, ic parcourant les phases statoriques A, B, C.

Au cours d'une étape 214, le module de conversion (a, b, c / $\alpha$, $\beta$) 116 convertit les courants de phase $[i] = i_A$, $i_B$, ic en courants de phase $[i] = i_\alpha$, $i_\beta$.

Au cours d'une étape 216, le module 132 détermine un spectre d'amplitude S d'une grandeur électrique déterminée à partir d'au moins une partie des courants de phase $[i] = i_\alpha$, $i_\beta$. Dans l'exemple décrit, la grandeur électrique est la composante $i_\alpha$.

En référence à la figure 3, le spectre d'amplitude S comporte, en ce qui concerne les hautes fréquences, un premier pic 302 à la fréquence $f_h + f_b$ et un deuxième pic 304 à la fréquence $f_h - f_b$. Les deux pics 302, 304 présentent la même amplitude $I_{pul}$.

En effet, comme cela est connu en soi, en régime établi et en négligeant les effets résistifs, les tensions de phase à haute fréquence $[v_h] = v_{dh}$, $v_{qh}$ et les courants de phase à haute fréquence $[i_h] = i_{dh}$, $i_{qh}$ sont reliés par l'équation suivante :

$$\begin{bmatrix} v_{dh} \\ v_{qh} \end{bmatrix} = \begin{bmatrix} Z_{dh} & 0 \\ 0 & Z_{qh} \end{bmatrix} \begin{bmatrix} i_{dh} \\ i_{qh} \end{bmatrix}$$

avec $Z_{dh} = j\,2\pi\,f_h\,L_d$ et $Z_{qh} = j\,2\pi\,f_h\,L_q$.

Or, dans le cas présent, les tensions de phase à haute fréquence $[v_h] = v_{dh}$, $v_{qh}$ sont données par l'équation suivante :

$$\begin{bmatrix} V_{dh} \\ V_{qh} \end{bmatrix} = V_h \begin{bmatrix} \cos(2\pi\,f_h\,t) \\ 0 \end{bmatrix}$$

En outre, il est possible d'exprimer les courants de phase à haute fréquence $[i_h] = i_{dh}$, $i_{qh}$ en fonction des tensions de phase à haute fréquence $[v_h] = v_{dh}$, $v_{qh}$ :

$$\begin{bmatrix} i_{dh} \\ i_{qh} \end{bmatrix} = \frac{V_h}{2\pi\, f_h L_d} \begin{bmatrix} \sin(2\pi\, f_h\, t) \\ 0 \end{bmatrix}$$

Cette équation peut être transposée dans le repère $\alpha$-$\beta$ :

$$\begin{bmatrix} i_{\alpha h} \\ i_{\beta h} \end{bmatrix} = I_{pul} \begin{bmatrix} \sin(2\pi\, f_b\, t + 2\pi\, f_h\, t) + \sin(2\pi\, f_b\, t - 2\pi\, f_h\, t) \\ \cos(2\pi\, f_b\, t - 2\pi\, f_h\, t) + \cos(2\pi\, f_b\, t + 2\pi\, f_h\, t) \end{bmatrix}$$

avec $I_{pul} = \dfrac{V_h}{4\pi\, f_h L_d}$ .

La composante $i_{\alpha h}$ comporte donc deux pics d'amplitude $I_{pul}$ et de fréquences respective $f_b + f_h$ et $f_b - f_h$.

Ainsi, le spectre d'amplitude S comporte bien, en ce qui concerne les hautes fréquences, un pic à la fréquence $f_b + f_h$ et un pic à la fréquence $f_b - f_h$, tous les deux de même amplitude $I_{pul}$.

En outre, d'après les équations précédentes, l'amplitude $I_{pul}$ du premier pic 302 (et du deuxième pic 304) du spectre d'amplitude S est donnée par l'équation suivante :

$$I_{pul} = \frac{V_h}{4\pi\, f_h L_d}$$

De retour à la figure 2, au cours d'une étape 218, le module de recherche de pic 134 recherche dans le spectre d'amplitude S un pic présent à la fréquence $f_h + f_b$, trouve le premier pic 302 et détermine son amplitude $I_{pul}$.

Au cours d'une étape 220, le module 136 détermine l'inductance La à partir de l'amplitude $I_{pul}$.

Comme indiqué précédemment, dans l'exemple décrit, l'inductance La est déterminée par l'équation suivante :

$$L_d = \frac{V_h}{4\pi\, f_h I_{pul}}$$

Au cours d'une deuxième étape de test 222, les étapes 224 à 238 suivantes sont réalisées.

Au cours d'une étape 224 le module de consigne 124 détermine des consignes principales $[v_b{}^*] = v_d{}^*,\ v_q{}^*$ à partir de la consigne de couple T* (Le module 125 n'est pas utilisé de sorte que va* est égal à $\overline{v_d}{}^*$). La consigne de couple T* est la même que dans la première étape de test 202.

Au cours d'une étape 226, le module de conversion (d, q / $\alpha$, $\beta$) 126 convertit les consignes principales $[v_b{}^*] = va^*,\ v_q{}^*$ en consignes principales $[v_b{}^*] = \overline{v_\alpha}{}^*, \overline{v_\beta}{}^*$.

Au cours d'une étape 228, les modules d'injection rotative $127_1$, $127_2$ injectent des consignes de test $[v_h{}^*]$ dans les consignes principales $[v_b{}^*]$. Plus précisément, les modules d'injection rotative $127_1$, $127_2$ ajoutent les composante $v_{rot\_\alpha}$, $v_{rot\_\beta}$ respectivement aux composantes $\overline{v_\alpha}{}^*$, $\overline{v_\beta}{}^*$ pour fournir des consignes globales $[v^*] = v_d{}^*,\ v_\beta{}^*$.

Au cours d'une étape 230, le module de sortie 128 commande l'onduleur 110 de sorte que ce dernier applique les consignes globales $[v^*] = v_A{}^*,\ v_B{}^*,\ vc^*$ sur respectivement les phases statoriques A, B, C.

Ainsi, les consignes globales $[v^*] = v_A{}^*,\ v_B{}^*,\ vc^*$ comportent, d'une part, les consignes principales $[v_b{}^*]$ dont l'application aux phases statoriques A, B, C entraîne la génération d'un champ magnétique tournant $B_b$ à la fréquence de rotation $f_b$ (la même que dans la première étape de test 202) et, d'autre part, les consignes de test $[v_h{}^*]$ dont l'application aux phases statoriques A, B, C entraîne la génération d'un champ magnétique de test $B_h$ tournant à la fréquence de test $f_h$.

Au cours d'une étape 232, pendant la commande de la machine électrique 102, le dispositif de mesure 112 mesure les courants de phase $[i] = i_A,\ i_B,\ ic$ parcourant les phases statoriques A, B, C.

Au cours d'une étape 234, le module de conversion (a, b, c / $\alpha$, $\beta$) 116 convertit les courants de phase $[i] = i_A,\ i_B,\ ic$ en courants de phase $[i] = i_\alpha,\ i_\beta$.

Au cours d'une étape 236, le module 130 détermine un spectre d'amplitude S d'une grandeur électrique déterminée à partir des courants de phase $[i] = i_\alpha,\ i_\beta$, cette grandeur électrique étant la composante $i_\alpha$ dans l'exemple décrit.

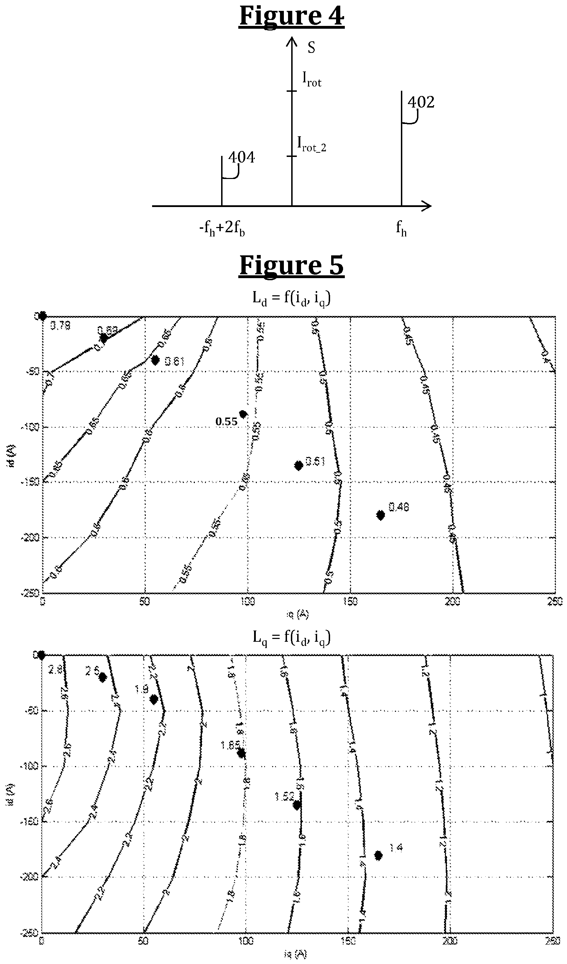

En référence à la figure 4, le spectre d'amplitude S comporte, en ce qui concerne les hautes fréquences, un premier pic 402 à la fréquence de test $f_h$ et un deuxième pic 404 à la fréquence $-f_h + 2f_b$. Le premier pic 402 présente une amplitude $I_{rot}$ et le deuxième pic 404 présente une amplitude $I_{rot\_2}$ différente de l'amplitude $I_{rot}$.

En effet, comme cela est connu en soi, en régime établi et en négligeant les effets résistifs, les tensions de phase à haute fréquence $[v_h] = v_{dh}, v_{qh}$ et les courants de phase à haute fréquence $[i_h] = i_{dh}, i_{qh}$ sont reliés par l'équation suivante :

$$\begin{bmatrix} v_{dh} \\ v_{qh} \end{bmatrix} = \begin{bmatrix} Z_{dh} & 0 \\ 0 & Z_{qh} \end{bmatrix} \begin{bmatrix} i_{dh} \\ i_{qh} \end{bmatrix}$$

avec $Z_{dh} = j\,2\pi\,f_h\,L_d$ et $Z_{qh} = j\,2\pi\,f_h\,L_q$.

Cette équation peut être transposée dans le repère $\alpha$-$\beta$ :

$$\begin{bmatrix} v_{\alpha h} \\ v_{\beta h} \end{bmatrix} = \begin{bmatrix} \Sigma Z + \Delta Z \cos(2\theta) & \Delta Z \sin(2\theta) \\ \Delta Z \sin(2\theta) & \Sigma Z - \Delta Z \cos(2\theta) \end{bmatrix} \begin{bmatrix} i_{\alpha h} \\ i_{\beta h} \end{bmatrix}$$

avec $\Sigma Z = \dfrac{Z_{dh}+Z_{qh}}{2}$ et $\Delta Z = \dfrac{Z_{dh}-Z_{qh}}{2}$ .

En outre, il est possible d'exprimer les courants de phase à haute fréquence $[i_h] = i_{\alpha h}, i_{\beta h}$ en fonction des tensions de phase à haute fréquence $[v_h] = v_{\alpha h}, v_{\beta h}$ :

$$\begin{bmatrix} I_{\alpha h} \\ I_{\beta h} \end{bmatrix} = \frac{1}{Z_{dh}\,Z_{qh}} \begin{bmatrix} \Sigma Z - \Delta Z \cos(2\theta) & -\Delta Z \sin(2\theta) \\ -\Delta Z \sin(2\theta) & \Sigma Z + \Delta Z \cos(2\theta) \end{bmatrix} \begin{bmatrix} V_{\alpha h} \\ V_{\beta h} \end{bmatrix}$$

Or, dans le cas présent, les tensions de phase à haute fréquence $[v_h] = v_{\alpha h}, v_{\beta h}$ sont données par l'équation suivante :

$$\begin{bmatrix} V_{\alpha h} \\ V_{\beta h} \end{bmatrix} = V_h \begin{bmatrix} \cos(2\pi\,f_h\,t) \\ \sin(2\pi\,f_h\,t) \end{bmatrix}$$

Ainsi, les courants de phase à haute fréquence $[i_h] = i_{\alpha h}, i_{\beta h}$ sont donnés par l'équation suivante :

$$\begin{bmatrix} i_{\alpha h} \\ i_{\beta h} \end{bmatrix} = \frac{V_h}{Z_{dh}\,Z_{qh}} \begin{bmatrix} \Sigma Z - \Delta Z \cos(2\theta) & -\Delta Z \sin(2\theta) \\ -\Delta Z \sin(2\theta) & \Sigma Z + \Delta Z \cos(2\theta) \end{bmatrix} \begin{bmatrix} \cos(2\pi\,f_h\,t) \\ \sin(2\pi\,f_h\,t) \end{bmatrix}$$

En particulier, la composante $i_{\alpha h}$ est donné par l'équation :

$$i_{\alpha h} = \frac{V_h}{Z_{dh}\,Z_{qh}} \left( \Sigma Z \cos(2\pi\,f_h\,t) - \Delta Z \cos(-2\pi\,f_h\,t + 2\theta) \right)$$

Cette équation peut également s'écrire sous la forme :

$$i_{\alpha h} = I_{rot} \cos(2\pi\,f_h\,t) + I_{rot\_2} \cos(-2\pi\,f_h\,t + 4\pi\,f_b\,t)$$

avec $I_{rot} = \dfrac{(L_d+L_q)V_h}{4\pi\,f_h L_d L_q}$ et $I_{rot\_2} = \dfrac{(L_d-L_q)V_h}{4\pi\,f_h L_d L_q}$ .

Ainsi, la composante $i_{\alpha h}$ comporte un pic à la fréquence $f_h$ et un pic à la fréquence $-f_h + 2f_b$, d'amplitudes respectives $I_{rot}$ et $I_{rot\_2}$.

Ainsi, le spectre d'amplitude S comporte bien, en ce qui concerne les hautes fréquences, un pic à la fréquence $f_h$ et un pic à la fréquence $-f_h + 2f_b$, d'amplitudes respectives $I_{rot}$ et $I_{rot\_2}$.

En outre, d'après les équations précédentes, les amplitudes $I_{rot}$ et $I_{rot\_2}$ des premier et deuxième pics 402, 404 du spectre d'amplitude S sont données par les équations suivantes :

$$I_{rot} = \frac{(L_d + L_q)V_h}{4\pi f_h L_d L_q}$$

$$I_{rot\_2} = \frac{(L_d - L_q)V_h}{4\pi f_h L_d L_q}$$

De retour à la figure 2, au cours d'une étape 238, le module de recherche de pic 134 recherche dans le spectre d'amplitude S un pic présent à la fréquence $f_h$, trouve le premier pic 402 et détermine son amplitude $I_{rot}$.

Au cours d'une étape 240, le module 136 détermine l'inductance $L_q$ à partir de l'amplitude $I_{rot}$, ainsi que de l'inductance La.

Comme indiqué précédemment, dans l'exemple décrit, l'inductance $L_q$ est déterminée par l'équation suivante :

$$L_q = -\frac{V_h}{-4\pi f_h I_{rot} + \dfrac{V_h}{L_d}}$$

avec $L_d$ l'inductance directe déterminée à l'étape 220.

Dans un mode de réalisation particulier, le procédé 200 est répété plusieurs fois avec une consigne de couple $T^*$ différente à chaque fois. En outre, à chaque mise en oeuvre du procédé 200, les inductances $L_d$, $L_q$ sont enregistrées avec les courants de phase principaux $[i_b] = i_{b\_d}$, $i_{b\_q}$ correspondants.

Ainsi, il est possible d'obtenir des cartographies associant les courants de phase avec l'inductance directe $L_d$ et l'inductance en quadrature $L_q$, ou bien de corriger des cartographies existantes (voir la figure 5, où les points de mesure sont indiqués par des ronds noirs). De telles cartographies sont utilisées pour concevoir un module de consigne (comme le module de consigne 124) adapté à la machine électrique 102 pour obtenir une commande précise de la machine électrique 102. Un tel module de commande adapté est alors implémenté dans un dispositif de commande destiné à être utilisé en production, qui est similaire au dispositif 114, si ce n'est qu'il ne comporte pas les modules d'injection 125, $127_1$, $127_2$ ni les modules 132, 134, 136 servant à la détermination des inductances $L_d$, $L_q$.

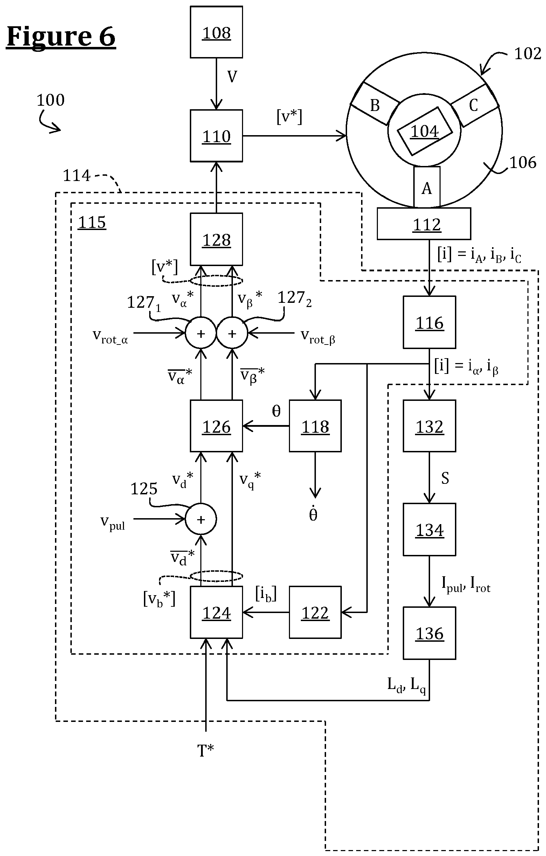

Alternativement, en référence à la figure 6, la détermination des inductances $L_d$, $L_q$ est utilisée par le module de consigne 124 pour établir les consignes principales $[v_b^*]$ à partir des courants principaux $[i_b]$ et des inductances $L_d$, $L_q$ déterminées. Dans ce cas, les inductances $L_d$, $L_q$ sont par exemple mises à jour à intervalle régulier, par exemple tous les jours ou toutes les semaines. Ainsi, il est possible de tenir compte de dérives des inductances $L_d$, $L_q$, par exemple dues à l'usure de la machine électrique 102, pour la commande de la machine électrique 102.

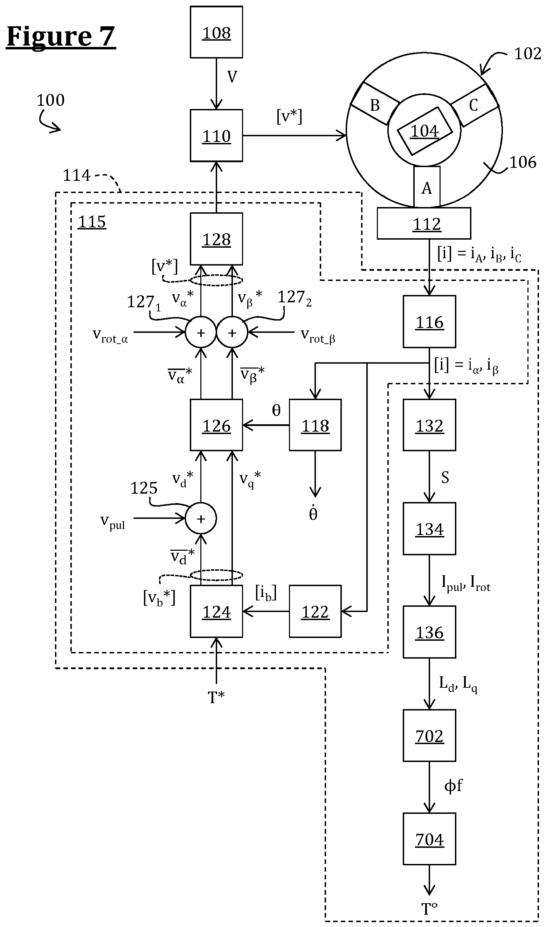

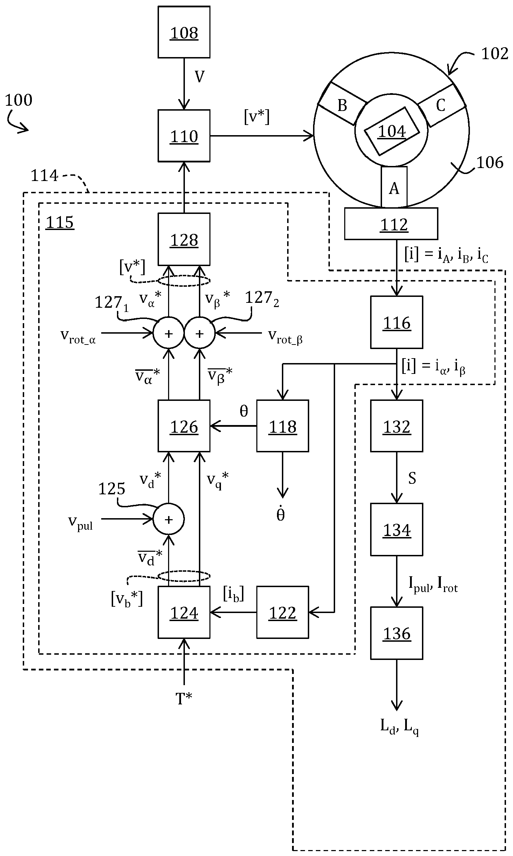

En référence à la figure 7, dans un autre mode de réalisation, le dispositif 114 comporte un module de détermination de flux 702 conçu pour déterminer un flux rotorique $\phi f$ à partir des inductances $L_d$, $L_q$. Par exemple, les composantes $\phi f_d$, $\phi f_q$ du flux rotorique $\phi f$ dans le repère d-q sont déterminées à partir des équations suivantes :

$$\phi f_d = \phi_d - L_d i_{b\_d}$$

$$\phi f_q = \phi_q - L_q i_{b\_q}$$

où $\phi_d$, $\phi_q$ sont les fuites totales de flux, connues par ailleurs.

En outre, le dispositif 114 comporte un module de détermination de température 704 conçu pour déterminer une température $T°$ de la machine électrique 102 à partir du flux rotorique $\phi f$. Par exemple, la température $T°$ est donnée par l'équation suivante :

$$T° = k\,|\phi f|$$

où k est une constante connue par ailleurs et $|\phi f| = \sqrt{\phi f_d{}^2 + \phi f_q{}^2}$ .

Bien sûr, les deux modules 702, 704 pourraient être combinés en un seul module pour déterminer directement la température T° de la machine électrique 102 à partir des inductances $L_d$, $L_q$.

La présente invention n'est pas limitée au mode de réalisation décrit précédemment, mais est au contraire définie par les revendications qui suivent.

Par exemple, le module d'estimation 118 pourrait être conçu pour estimer la position angulaire $\theta$ du rotor 104 à partir des courants de phase $[i] = i_A, i_B, ic$. Dans ce cas, le module de conversion 116 serait supprimé et le module d'estimation 118 recevrait directement les courants de phase $[i] = i_A, i_B, ic$ mesurés par le dispositif de mesure 112.

En outre, la position angulaire $\theta$ pourrait être exprimée sous la forme des deux variables $\sin(\theta)$ et $\cos(\theta)$. En effet, la position angulaire $\theta$ est généralement utilisée dans le module de conversion $(d, q / \alpha, \beta)$ 126 sous la forme des deux variables $\sin(\theta)$ et $\cos(\theta)$. En outre, l'utilisation des deux variables $\sin(\theta)$ et $\cos(\theta)$ permet d'éviter l'erreur de module $2\pi$ (c'est-à-dire la confusion entre $\theta$ et $\theta + 2\pi$).

En outre, seules les étapes 222 à 240 pourraient être réalisées pour déterminer l'inductance direct $L_d$ et l'inductance en quadrature $L_q$. Dans ce cas, le module de recherche de pic 134 chercherait les pics présents aux fréquences $f_h$ et $-f_h+2_f$, trouverait le premier pic 402 et le deuxième pic 404 et déterminerait leurs amplitudes $I_{rot}$, $I_{rot\_2}$. En outre, le module de détermination d'inductance 136 déterminerait l'inductance directe $L_d$ et l'inductance en quadrature $L_q$ en résolvant le système suivant de deux équations à deux inconnues :

$$I_{rot} = \frac{(L_d + L_q)V_h}{4\pi\, f_h L_d L_q}$$

$$I_{rot\_2} = \frac{(L_d - L_q)V_h}{4\pi\, f_h L_d L_q}$$

En outre, la fréquence de test $f_h$ pourrait être du même ordre de grandeur que la fréquence de rotation $f_b$. Dans ce cas, d'autres équations reliant l'amplitude d'un ou plusieurs pics du spectre d'amplitude S, seraient utilisées pour déterminer les inductances $L_d$, $L_q$. Ces autres équations pourront aisément être déterminées par l'homme du métier selon les besoins.

RÉFÉRENCES

| | |
|---|---|
| Système électrique | 100 |
| Machine électrique | 102 |
| Rotor | 104 |
| Stator | 106 |
| Source de tension continue | 108 |
| Onduleur | 110 |
| Dispositif de mesure | 112 |
| Dispositif de détermination des inductances | 114 |
| Module de commande | 115 |
| Module de conversion $(a, b, c / \alpha, \beta)$ | 116 |
| Module d'estimation angulaire | 118 |
| Module d'estimation de courant principaux | 122 |
| Module de consigne | 124 |
| Module d'injection pulsative | 125 |
| Module de conversion $(d, q / \alpha, \beta)$ | 126 |
| Modules d'injection rotative | $127_1, 127_2$ |
| Module de sortie | 128 |
| Module d'analyse spectrale | 132 |
| Module de recherche de pic | 134 |
| Module de détermination d'inductance | 136 |

**Revendications**

1. Procédé (200) de détermination d'une inductance directe ($L_d$) et d'une inductance en quadrature ($L_q$) dans un repère tournant attaché à un rotor (104) d'une machine électrique (102), le procédé (200) comportant :

   - au moins un test (202, 222) comportant :

      - la commande (210, 230) de la machine électrique (102) de sorte qu'un stator (106) de la machine électrique (102) génère un champ magnétique ($B_{sup}$) comportant :

         - un premier champ magnétique tournant ($B_b$) à une première fréquence de rotation ($f_b$) entraînant le rotor (104) de la machine électrique (102) en rotation, et
         - un deuxième champ magnétique, dit champ magnétique de test, ($B_h$) variant périodiquement à une deuxième fréquence, dite fréquence de test ($f_h$),

      - la mesure (212, 232) d'au moins une partie de courants de phase ($i_A$, $i_B$, ic) parcourant des phases statoriques (A, B, C) de la machine électrique (102) pendant la commande de la machine électrique (102),
      - la détermination (214, 234) d'un spectre d'amplitude (S) d'une grandeur électrique déterminée à partir d'au moins une partie des courants de phase ($i_A$, $i_B$, ic), le procédé étant **caractérisé en ce qu'**il comporte en outre :

         - la recherche (216, 236) dans le spectre d'amplitude (S) d'au moins un pic présent à une fréquence ($f_h$+$f_b$, $f_h$) dépendant de la fréquence de test ($f_h$),
         - la détermination (218, 238) d'une amplitude ($I_{pul}$, $I_{rot}$) de chaque pic trouvé,

   - la détermination (220, 240) de l'inductance directe ($L_d$) et de l'inductance en quadrature ($L_q$) à partir des amplitudes ($I_{pul}$, $I_{rot}$) de deux pics trouvés lors de la ou des étapes de test procédé dans lequel, par ailleurs :

      la au moins une étape de test comporte une première étape de test (202) dans laquelle le champ magnétique de test ($B_h$) varie uniquement dans le sens direct du premier champ magnétique (Bb), et
      au cours de la première étape de test, la commande de la machine électrique (102) comporte :

         - la détermination de consignes ([v*]) de tensions de phase, dites consignes globales, lesdites consignes globales comportant des consignes, dites consignes de test, dont l'application aux phases statoriques (A, B, C) de la machine électrique (102) est destinée à générer le champ magnétique de test (Bh), les consignes de test comportant une composante dans le sens direct (vpul) qui est sinusoïdale à la fréquence de test (fh), et une composante dans le sens de quadrature qui est nulle,
         - l'application des consignes globales ([v*]), respectivement aux phases statoriques (A, B, C) de la machine électrique (102),

   l'inductance directe ($L_d$) étant déterminée par l'équation suivante :

$$L_d = \frac{V_h}{4\pi\, f_h I_{pul}}$$

   où :

      $I_{pul}$ est l'amplitude du pic trouvé à la somme de la fréquence de rotation ($f_b$) et de la fréquence de test ($f_h$),
      $V_h$ et $f_h$ sont respectivement l'amplitude et la fréquence de la composante sinusoïdale dans le sens direct ($v_{pul}$) des consignes de test.

2. Procédé selon la revendication 1, dans lequel la fréquence de test ($f_h$) est supérieure à la fréquence de rotation ($f_b$), de préférence au moins dix fois supérieure.

3. Procédé (200) selon la revendication 1 ou 2, dans lequel, au cours de la première étape de test, un pic est recherché à la somme de la fréquence de rotation ($f_b$) et de la fréquence de test ($f_h$).

EP 3 560 095 B1

**4.** Procédé (200) selon l'une quelconque des revendications 1 à 3, comportant une deuxième étape de test (222) dans laquelle le champ magnétique de test (B$_h$) est un champ magnétique tournant à la fréquence de test (f$_h$).

**5.** Procédé (200) selon l'une des revendications précédentes, dans lequel, au cours de la deuxième étape de test, un pic est recherché à la fréquence de test (f$_h$).

**6.** Procédé (200) selon la revendication 4 ou 5, dans lequel, au cours de la deuxième étape de test (222), la commande de la machine électrique (102) comporte la détermination de consignes globales ([v*]) de tensions de phase comportant des consignes de test dont l'application aux phases statoriques (A, B, C) est destinée à générer le champ magnétique de test (B$_h$), ces consignes de test comportant une composante (v$_{rot\_\alpha}$) selon un premier axe d'un repère fixe par rapport au stator (106) qui est sinusoïdale à la fréquence de test (f$_h$), et une composante (v$_{rot\_\beta}$) selon un deuxième axe du repère fixe qui est cosinusoïdale à la fréquence de test (f$_h$).

**7.** Procédé (200) selon la revendication 6 combinée à la revendication 5, dans lequel les deux composantes (v$_{rot\_\alpha}$, v$_{rot\_\beta}$) des consignes de test présentent une même amplitude de test (V$_h$), et dans lequel l'inductance en quadrature (L$_q$) est déterminée par l'équation suivante :

$$L_q = -\frac{V_h}{-4\pi f_h I_{rot} + \frac{V_h}{L_d}}$$

où :

I$_{rot}$ est l'amplitude du pic trouvé à la fréquence de test (f$_h$),
V$_h$ et f$_h$ sont respectivement l'amplitude et la fréquence des deux composantes (V$_{rot\_\alpha}$, v$_{rot\_\beta}$) des consignes de test.

**8.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé selon l'une quelconque des revendications 1 à 7, lorsque ledit programme est exécuté sur un ordinateur.

**9.** Dispositif (114) de détermination d'une inductance directe (L$_d$) et d'une inductance en quadrature (L$_q$) dans un repère tournant attaché à un rotor (104) d'une machine électrique (102), le dispositif (114) comportant :

- un module de commande (115) d'un onduleur (110) conçu pour respectivement fournir à des phases statoriques (A, B, C) de la machine électrique (102) des tensions de phases (v$_A$, v$_B$, v$_C$), de sorte qu'un stator (106) de la machine électrique (102) génère un champ magnétique (B$_{sup}$) comportant :

- un premier champ magnétique tournant (B$_b$) à une fréquence de rotation (f$_b$) entraînant le rotor (104) de la machine électrique (102) en rotation, et
- un deuxième champ magnétique, dit champ magnétique de test (B$_h$), variant périodiquement à une deuxième fréquence, dite fréquence de test (f$_h$),

- un module (130) de détermination d'un spectre d'amplitude (S) d'une grandeur électrique déterminée à partir d'au moins une partie de courants de phase (i$_A$, i$_B$, i$_C$) mesurés parcourant des phases statoriques (A, B, C) de la machine électrique (102) pendant la commande de la machine électrique (102), le module de commande étant **caractérisé en ce qu'**il comprend :

- un module (134) de recherche dans le spectre d'amplitude (S) d'au moins un pic présent à une fréquence (f$_h$+f$_b$, f$_h$) dépendant de la fréquence de test (f$_h$) et de détermination d'une amplitude (I$_{pul}$, I$_{rot}$) de chaque pic trouvé,
- un module (136) conçu pour déterminer l'inductance directe (L$_d$) et l'inductance en quadrature (L$_q$) à partir des amplitudes (I$_{pul}$, I$_{rot}$) de deux pics trouvés,
le module de commande étant configuré de sorte que, durant une première étape de test (202), le champ magnétique de test (B$_h$) varie uniquement dans le sens direct du premier champ magnétique (Bb), et pour fournir des consignes ([v*]) de tensions de phase, dites consignes globales, lesdites consignes globales

**13**

comportant des consignes, dites consignes de test, dont l'application aux phases statoriques (A, B, C) de la machine électrique (102) est destinée à générer le champ magnétique de test (Bh), les consignes de test comportant une composante dans le sens direct (vpul) qui est sinusoïdale à la fréquence de test (fh), et une composante dans le sens de quadrature qui est nulle, les consignes globales ([v*]) étant appliquées respectivement aux phases statoriques (A, B, C) de la machine électrique (102),

le module (136) conçu pour déterminer l'inductance directe (Ld) et l'inductance en quadrature (Lq) à partir des amplitudes (Ipul, Irot) de deux pics trouvés étant configuré pour déterminer l'inductance directe ($L_d$) par l'équation suivante :

$$L_d = \frac{V_h}{4\pi\, f_h I_{pul}}$$

où :

$I_{pul}$ est l'amplitude du pic trouvé à la somme de la fréquence de rotation ($f_b$) et de la fréquence de test ($f_h$),
$V_h$ et $f_h$ sont respectivement l'amplitude et la fréquence de la composante sinusoïdale dans le sens direct ($v_{pul}$) des consignes de test.

## Patentansprüche

1. Verfahren (200) zur Bestimmung einer Direktinduktivität ($L_d$) und einer Quadraturinduktivität ($L_q$) in einem an einem Rotor (104) einer elektrischen Maschine (102) angebrachten rotierenden Bezugssystem, wobei das Verfahren (200) aufweist:

    - mindestens einen Test (202, 222), der aufweist:

        - die Steuerung (210, 230) der elektrischen Maschine (102) derart, dass ein Stator (106) der elektrischen Maschine (102) ein Magnetfeld ($B_{sup}$) erzeugt, das aufweist:

            - ein mit einer ersten Rotationsfrequenz ($f_b$) rotierendes erstes Magnetfeld ($B_b$), das den Rotor (104) der elektrischen Maschine (102) in Drehung versetzt, und
            - ein zweites Magnetfeld, Testmagnetfeld genannt, ($B_h$) das periodisch mit einer zweiten Frequenz variiert, Testfrequenz ($f_h$) genannt,

        - die Messung (212, 232) mindestens eines Teils von Phasenströmen ($i_A$, $i_B$, $i_C$), die Statorphasen (A, B, C) der elektrischen Maschine (102) während der Steuerung der elektrischen Maschine (102) durchströmen,
        - die Bestimmung (214, 234) eines Amplitudenspektrums (S) einer bestimmten elektrischen Größe ausgehend von mindestens einem Teil der Phasenströme ($i_A$, $i_B$, $i_C$),

    wobei das Verfahren **dadurch gekennzeichnet ist, dass** es außerdem aufweist:

        - die Suche (216, 236) im Amplitudenspektrum (S) mindestens einer bei einer Frequenz ($f_h+f_b$, $f_h$) abhängig von der Testfrequenz ($f_h$) vorhandenen Spitze,
        - die Bestimmung (218, 238) einer Amplitude ($I_{pul}$, $I_{rot}$) jeder gefundenen Spitze,
        - die Bestimmung (220, 240) der Direktinduktivität ($L_d$) und der Quadraturinduktivität ($L_q$) ausgehend von den Amplituden ($I_{pul}$, $I_{rot}$) von zwei während des oder der Testschritte gefundenen Spitzen, Verfahren, bei dem außerdem:

            der mindestens eine Testschritt einen ersten Testschritt (202) aufweist, in dem das Testmagnetfeld ($B_h$) nur in der direkten Richtung des ersten Magnetfelds ($B_b$) variiert, und
            während des ersten Testschritts die Steuerung der elektrischen Maschine (102) aufweist:

                - die Bestimmung von Sollwerten ([v*]) von Phasenspannungen, globale Sollwerte genannt, wobei die globalen Sollwerte Testsollwerte genannte Sollwerte aufweisen, deren Anwendung an die Statorphasen (A, B, C) der elektrischen Maschine (102) dazu bestimmt ist, das Testmagnetfeld ($B_h$) zu erzeugen,

wobei die Testsollwerte eine Komponente in direkter Richtung ($v_{pul}$), die bei der Testfrequenz ($f_h$) sinusförmig ist, und eine Komponente in Quadraturrichtung aufweisen, die Null ist,
- die Anwendung der globalen Sollwerte ([v*]) an die Statorphasen (A, B, C) der elektrischen Maschine (102),

wobei die Direktinduktivität (La) durch die folgende Gleichung bestimmt wird:

$$L_d = \frac{V_h}{4\pi f_h I_{pul}}$$

wobei:

$I_{pul}$ die Amplitude der bei der Summe der Rotationsfrequenz ($f_b$) und der Testfrequenz ($f_h$) gefundenen Spitze ist,
$V_h$ und $f_h$ die Amplitude bzw. die Frequenz der sinusförmigen Komponente in direkter Richtung ($v_{pul}$) der Testsollwerte sind.

2. Verfahren nach Anspruch 1, wobei die Testfrequenz ($f_h$) höher ist als die Rotationsfrequenz ($f_b$), vorzugsweise mindestens zehnmal höher.

3. Verfahren (200) nach Anspruch 1 oder 2, wobei während des ersten Testschritts eine Spitze bei der Summe der Rotationsfrequenz ($f_b$) und der Testfrequenz ($f_h$) gesucht wird.

4. Verfahren (200) nach einem der Ansprüche 1 bis 3, das einen zweiten Testschritt (222) aufweist, in dem das Testmagnetfeld ($B_h$) ein mit der Testfrequenz ($f_h$) rotierendes Magnetfeld ist.

5. Verfahren (200) nach einem der vorhergehenden Ansprüche, wobei während des zweiten Testschritts eine Spitze bei der Testfrequenz ($f_h$) gesucht wird.

6. Verfahren (200) nach Anspruch 4 oder 5, wobei während des zweiten Testschritts (222) die Steuerung der elektrischen Maschine (102) die Bestimmung von globalen Sollwerten ([v*]) von Phasenspannungen aufweist, die Testsollwerte aufweisen, deren Anwendung an die Statorphasen (A, B, C) dazu bestimmt ist, das Testmagnetfeld ($B_h$) zu erzeugen, wobei diese Testsollwerte eine Komponente ($v_{rot\_\alpha}$) gemäß einer ersten Achse eines ortsfesten Bezugssystems bezüglich des Stators (106), die bei der Testfrequenz ($f_h$) sinusförmig ist, und eine Komponente ($v_{rot\_\beta}$) gemäß einer zweiten Achse des ortsfesten Systems aufweisen, die bei der Testfrequenz ($f_h$) kosinusförmig ist.

7. Verfahren (200) nach Anspruch 6 kombiniert mit Anspruch 5, wobei die zwei Komponenten ($v_{rot\_\alpha}$, $v_{rot\_\beta}$) der Testsollwerte eine gleiche Testamplitude ($V_h$) aufweisen, und wobei die Quadraturinduktivität ($L_q$) durch die folgende Gleichung bestimmt wird:

$$L_q = -\frac{V_h}{-4\pi f_h I_{rot} + \dfrac{V_h}{L_d}}$$

wobei:

$I_{rot}$ die Amplitude der bei der Testfrequenz ($f_h$) gefundenen Spitze ist,
$V_h$ und $f_h$ die Amplitude bzw. die Frequenz der zwei Komponenten ($v_{rot\_\alpha}$, $v_{rot\_\beta}$) der Testsollwerte sind.

8. Computerprogramm, das von einem Kommunikationsnetzwerk herunterladbar und/oder auf einem computerlesbaren Träger gespeichert und/oder von einem Prozessor ausführbar ist, **dadurch gekennzeichnet, dass** es Anweisungen zur Ausführung der Schritte eines Verfahrens nach einem der Ansprüche 1 bis 7 enthält, wenn das Programm auf einem Computer ausgeführt wird.

9. Vorrichtung (114) zur Bestimmung einer Direktinduktivität ($L_d$) und einer Quadraturinduktivität ($L_q$) in einem an einem Rotor (104) einer elektrischen Maschine (102) angebrachten rotierenden Bezugssystem, wobei die Vorrichtung (114) aufweist:

- ein Modul (115) zur Steuerung eines Wechselrichters (110), der konzipiert ist, bei Statorphasen (A, B, C) der elektrischen Maschine (102) Phasenspannungen ($v_A$, $v_B$, $v_C$) zu liefern, so dass ein Stator (106) der elektrischen Maschine (102) ein Magnetfeld ($B_{sup}$) erzeugt, das aufweist:

- ein mit einer Rotationsfrequenz ($f_b$) rotierendes erstes Magnetfeld ($B_b$), das den Rotor (104) der elektrischen Maschine (102) in Drehung versetzt, und
- ein zweites Magnetfeld, Testmagnetfeld ($B_h$) genannt, das periodisch mit einer zweiten Frequenz variiert, Testfrequenz ($f_h$) genannt,

- ein Modul (130) zur Bestimmung eines Amplitudenspektrums (S) einer elektrischen Größe bestimmt ausgehend von mindestens einem Teil von gemessenen Phasenströmen ($i_A$, $i_B$, $i_C$), die Statorphasen (A, B, C) der elektrischen Maschine (102) während der Steuerung der elektrischen Maschine (102) durchströmen,

wobei das Steuermodul **dadurch gekennzeichnet ist, dass** es enthält:

- ein Modul (134) zur Suche im Amplitudenspektrum (S) mindestens einer vorhandenen Spitze bei einer Frequenz ($f_h+f_b$, $f_h$) abhängig von der Testfrequenz ($f_h$) und zur Bestimmung einer Amplitude ($I_{pul}$, $I_{rot}$) jeder gefundenen Spitze,
- ein Modul (136), das konzipiert ist, die Direktinduktivität ($L_d$) und die Quadraturinduktivität ($L_q$) ausgehend von den Amplituden ($I_{pul}$, $I_{rot}$) von zwei gefundenen Spitzen zu bestimmen,
wobei das Steuermodul konfiguriert ist, damit während eines ersten Testschritts (202) das Testmagnetfeld ($B_h$) nur in der direkten Richtung des ersten Magnetfelds ($B_b$) variiert, und um Sollwerte ([v*]) von Phasenspannungen, globale Sollwerte genannt, zu liefern, wobei die globalen Sollwerte Testsollwerte genannte Sollwerte aufweisen, deren Anwendung an die Statorphasen (A, B, C) der elektrischen Maschine (102) dazu bestimmt ist, das Testmagnetfeld ($B_h$) zu erzeugen, wobei die Testsollwerte eine Komponente in der direkten Richtung ($v_{pul}$), die bei der Testfrequenz ($f_h$) sinusförmig ist, und eine Komponente in der Quadraturrichtung aufweisen, die Null ist, wobei die globalen Sollwerte ([v]*) an die Statorphasen (A, B, C) der elektrischen Maschine (102) angewendet werden,
wobei das Modul (136), das konzipiert ist, um die Direktinduktivität ($L_d$) und die Quadraturinduktivität ($L_q$) ausgehend von den Amplituden ($I_{pul}$, $I_{rot}$) von zwei gefundenen Spitzen zu bestimmen, konfiguriert ist, die Direktinduktivität ($L_d$) durch die folgende Gleichung zu bestimmen:

$$L_d = \frac{V_h}{4\pi f_h I_{pul}}$$

wobei:

$I_{pul}$ die Amplitude der gefundenen Spitze bei der Summe der Rotationsfrequenz ($f_b$) und der Testfrequenz ($f_h$) ist,
$V_h$ und $f_h$ die Amplitude bzw. die Frequenz der sinusförmigen Komponente in der direkten Richtung ($v_{pul}$) der Testsollwerte sind.

## Claims

1. Method (200) for determining a direct inductance ($L_d$) and a quadrature inductance ($L_q$) in a rotating frame of reference attached to a rotor (104) of an electric machine (102), the method (200) comprising:

- at least one test (202, 222) comprising:

- controlling (210, 230) the electric machine (102) so that a stator (106) of the electric machine (102) generates a magnetic field ($B_{sup}$) comprising:

- a first magnetic field ($B_b$) rotating at a first rotation frequency ($f_b$) causing the rotor (104) of the electric machine (102) to rotate, and
- a second magnetic field, called the test magnetic field, ($B_h$) varying periodically at a second frequency, called the test frequency ($f_h$),

- measuring (212, 332) at least some phase currents ($i_A$, $i_B$, $i_C$) passing through stator phases (A, B, C) of the electric machine (102) during the control of the electric machine (102),
- determining (214, 234) an amplitude spectrum (S) of a determined electrical quantity on the basis of at least some of the phase currents ($i_A$, $i_B$, $i_C$),

the method being **characterized in that** it additionally comprises:

- searching (216, 236) the amplitude spectrum (S) for at least one peak that is present at a frequency ($f_h+f_b$, $f_h$) dependent on the test frequency ($f_h$),
- determining (218, 238) an amplitude ($I_{pul}$, $I_{rot}$) of each peak found,
- determining (220, 240) the direct inductance ($L_d$) and the quadrature inductance ($L_q$) on the basis of the amplitudes ($I_{pul}$, $I_{rot}$) of two peaks found during the test step or steps,

a method wherein, moreover:

the at least one test step comprises a first test step (202), in which the test magnetic field ($B_h$) varies only in the forward direction of the first magnetic field ($B_b$), and
in the course of the first test step, the control of the electric machine (102) comprises:

- determining phase voltage commands ([v*]), called global commands, said global commands comprising commands, called test commands, the application of which to the stator phases (A, B, C) of the electric machine (102) is intended to generate the test magnetic field ($B_h$), the test commands comprising a component in the forward direction ($v_{pul}$) that is sinusoidal at the test frequency ($f_h$), and a component in the quadrature direction that is zero,
- respectively applying the global commands ([v*]) to the stator phases (A, B, C) of the electric machine (102),

the direct inductance ($L_d$) being determined by the following equation:

$$L_d = \frac{V_h}{4\pi\, f_h I_{pul}}$$

where:

$I_{pul}$ is the amplitude of the peak found at the sum of the rotation frequency ($f_b$) and the test frequency ($f_h$),
$V_h$ and $f_h$ are the amplitude and frequency, respectively, of the sinusoidal component in the forward direction ($v_{pul}$) of the test commands.

**2.** Method according to Claim 1, wherein the test frequency ($f_h$) is higher than the rotation frequency ($f_b$), preferably at least ten times higher.

**3.** Method (200) according to Claim 1 or 2, wherein, in the course of the first test step, a peak is sought at the sum of the rotation frequency ($f_b$) and the test frequency ($f_h$).

**4.** Method (200) according to any one of Claims 1 to 3, comprising a second test step (222), in which the test magnetic field ($B_h$) is a magnetic field rotating at the test frequency ($f_h$).

**5.** Method (200) according to one of the preceding claims, wherein, in the course of the second test step, a peak is sought at the test frequency ($f_h$).

**6.** Method (200) according to Claim 4 or 5, wherein, in the course of the second test step (222), the control of the electric machine (102) comprises determining global phase voltage commands ([v*]) comprising test commands, the application of which to the stator phases (A, B, C) is intended to generate the test magnetic field ($B_h$), these test commands comprising a component ($v_{rot\_\alpha}$) along a first axis of a frame of reference that is fixed relative to the stator (106), which component is sinusoidal at the test frequency ($f_h$), and a component ($v_{rot\_\beta}$) along a second axis of the fixed frame of reference, which component has a cosine waveform at the test frequency ($f_h$).

**7.** Method (200) according to Claim 6 in combination with Claim 5, wherein the two components ($v_{rot\_\alpha}$, $v_{rot\_\beta}$) of the

test commands have the same test amplitude ($V_h$), and wherein the quadrature inductance ($L_q$) is determined by the following equation:

$$L_q = -\frac{V_h}{-4\pi\, f_h I_{rot} + \dfrac{V_h}{L_d}}$$

where:

$I_{rot}$ is the amplitude of the peak found at the test frequency ($f_h$),
$V_h$ and $f_h$ are the amplitude and frequency, respectively, of the two test command components ($v_{rot\_\alpha}$, $v_{rot\_\beta}$).

8.  Computer program downloadable from a communication network and/or stored on a computer-readable medium and/or executable by a processor, **characterized in that** it includes instructions for executing the steps of a method according to any one of Claims 1 to 7 when said program is executed on a computer.

9.  Device (114) for determining a direct inductance ($L_d$) and a quadrature inductance ($L_q$) in a rotating frame of reference attached to a rotor (104) of an electric machine (102), the device (114) comprising:

    - a control module (115) of an inverter (110) designed to respectively provide stator phases (A, B, C) of the electric machine (102) with phase voltages ($v_A$, $v_B$, $v_C$) so that a stator (106) of the electric machine (102) generates a magnetic field ($B_{sup}$) comprising:

        - a first magnetic field ($B_b$) rotating at a rotation frequency ($f_b$) causing the rotor (104) of the electric machine (102) to rotate, and
        - a second magnetic field, called the test magnetic field, ($B_h$) varying periodically at a second frequency, called the test frequency ($f_h$),

    - a module (130) for determining an amplitude spectrum (S) of a determined electrical quantity on the basis of at least some measured phase currents ($i_A$, $i_B$, $i_C$) passing through stator phases (A, B, C) of the electric machine (102) during the control of the electric machine (102),

    the control module being **characterized in that** it comprises:

    - a module (134) for searching the amplitude spectrum (S) for at least one peak that is present at a frequency ($f_h+f_b$, $f_h$) dependent on the test frequency ($f_h$) and for determining an amplitude ($I_{pul}$, $I_{rot}$) of each peak found,
    - a module (136) designed to determine the direct inductance ($L_d$) and the quadrature inductance ($L_q$) on the basis of the amplitudes ($I_{pul}$, $I_{rot}$) of two peaks found,

    the control module being configured so that, during a first test step (202), the test magnetic field ($B_h$) varies only in the forward direction of the first magnetic field ($B_b$), and to provide phase voltage commands ([v*]), called global commands, said global commands comprising commands, called test commands, the application of which to the stator phases (A, B, C) of the electric machine (102) is intended to generate the test magnetic field ($B_h$), the test commands comprising a component in the forward direction ($v_{pul}$) that is sinusoidal at the test frequency ($f_h$), and a component in the quadrature direction that is zero, the global commands ([v*]) being respectively applied to the stator phases (A, B, C) of the electric machine (102), the module (136) designed to determine the direct inductance ($L_d$) and the quadrature inductance ($L_q$) on the basis of the amplitudes ($I_{pul}$, $I_{rot}$) of two peaks found being configured to determine the direct inductance ($L_d$) by the following equation:

$$L_d = \frac{V_h}{4\pi\, f_h I_{pul}}$$

where:

$I_{pul}$ is the amplitude of the peak found at the sum of the rotation frequency ($f_b$) and the test frequency ($f_h$),
$V_h$ and $f_h$ are the amplitude and frequency, respectively, of the sinusoidal component in the forward direction

($v_{pul}$) of the test commands.

# Figure 1

## Figure 2

200

| 202 | 204 → 206 → 208 → 210 | 212 → 214 → 216 → 218 |

| 222 | 224 → 226 → 228 → 230 | 232 → 234 → 236 → 238 |

220

240

## Figure 3

S

$I_{pul}$

304

302

$f_h - f_b$

$f_{h+}f_b$

# Figure 4

# Figure 5

$L_d = f(i_d, i_q)$

$L_q = f(i_d, i_q)$

## Figure 6

**Figure 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010000640 A1

**Littérature non-brevet citée dans la description**

- **I-HOON JANG et al.** *Analysis of Permanent Magnet Machine for Sensorless Control based on High Freuqency Signal Injection,* 31 Juillet 2001